# EUROPEAN PATENT APPLICATION

(11) **EP 0 659 482 A1**
(43) Date of publication of application: **28.06.1995**
(21) Application number: 94120244.2
(22) Date of filing: 20.12.1994
(51) Int. Cl.: B01J 47/00

(54) **Ion exchange resin sintered in porous matrix**

(30) Priority: 21.12.1993 US 170729
(71) Applicant: POREX TECHNOLOGIES CORP. OF GEORGIA, Fairburn Georgia 30213 (US); The Purolite C Company, Bala Cynwyd, Pennsylvania 19004 (US)
(72) Inventor: Giordano, Edward C., Peachtree City, Georgia 30269 (US); Newton, Michael Scott, Peachtree City, Georgia 30269 (US); Osterhoudt, Lewis E., Phoenixville, Pennsylvania 19469 (US)
(74) Representative: Sternagel, Hans-Günther, Dr.

(57) **Abstract**

A combination of a porous thermoplastic resin and an ion exchange resin is sintered to provide a single solid device for filtering and exchanging ions.

## Description

### BACKGROUND OF THE INVENTION

### 1. Field of the Invention

This invention relates to a solid, one-piece combination of a filter and an ion exchange resin. The filter material, which is a porous thermoplastic resin, is combined with particles of ion exchange resin and the combination is sintered to form the combination. The prepared combination can be used in the treatment of many fluids such as air, gases, smoke or vapors, liquids such as water and body fluids.

### 2. Description of the Related Art

The prior art is aware of water treatment apparatuses which contain treatment material sintered to porous bodies. Thus, Busch et al, in U.S. Pat. No. 5,064,534, disclose a water filter and treatment apparatus which contains a sintered polyethylene resin containing particles of charcoal and silver. This apparatus also contains free-standing ion exchange resin particles which serve as a water softener. The ion exchange resin is intentionally maintained apart from the sintered polyethylene filter and treatment portion of the apparatus. The prior art is also aware of water treatment apparatuses containing ion exchange resin beads held together with polymeric material. Thus, Heskett et al disclose in U.S. Pat. No. 3,538,020, aggregates of ion exchange particles entrapped in a polymer for use in a water softening device. This patent fails to disclose a sintering step in the preparation of the water treatment device.

The device of Busch et al has the disadvantage of maintaining the polyethylene filter mechanism separate from the ion exchange part, thus requiring a large apparatus.

### SUMMARY OF THE INVENTION

The present invention seeks to overcome the disadvantage found in the Busch et al apparatus and to provide a combination of mechanical filtration and ion exchange function in a single element.

Thus, this invention relates to a combination of at least one ion exchange resin and at least one thermoplastic polymeric binder sintered to form a one-piece apparatus for filtering fluids and exchanging ions with materials in the fluids, both air and liquid.

The apparatus of this invention provides a solid matrix which prevents fluid flow channeling often seen in loose resin bed products and presents a low restriction to flow. The apparatus of the invention may be obtained at low cost, using conventional resins as binders and ion exchange resins. A wide variety of sizes and shapes may be simply obtained. Such shapes include hollow cylinders, hollow cylinders with one closed end, solid cylinders, sheets, disks, and domes.

The present invention also provides for ease of assembly, thereby resulting in lower manufacturing costs.

The apparatus may be prepared by blending at least one ion exchange resin with at least one polymeric thermoplastic resin which is to serve as a porous resin binder and sintering the thus-produced combination. One advantage of the present invention is that sintering may be carried out without the destruction of the ion exchange resin.

Porosity, strength and flow characteristics of the apparatus may be controlled by the selection and shape of the material used as the resin binder and the sintering conditions.

The apparatus is useful for treating fluids, including air and water, and acts as a unitary filter and ion exchange device.

### DESCRIPTION OF THE PREFERRED EMBODIMENTS

Fluid treatment apparatuses of the present invention may be prepared by blending ion exchange resins with the polymeric binder and thermally processing the mixture.

The ion exchange materials used in this invention may be any of the commercially available grades of anion, cation, mixed bed, or adsorbent resin, based on the ion exchange functionality desired. Preferable particle size range for the ion exchange resin is between 10 and 325 US mesh size, preferably between 50 and 200 U.S mesh size.

The polymeric binder is a thermoplastic resin, preferably polyethylene, polypropylene or ethylene vinyl acetate. The choice of the binder resin is based on the need for the physical characteristics or chemical compatibility associated with the binder. The particle size of the binder resin is approximately 10 to 325 US mesh, preferably between 50 and 200 US mesh. At times it may be preferable to use a combination of different polymer grades to allow the solid matrix to have a desired characteristic. A low melt flow grade may be used to help define the matrix's average pore size, while a higher melt flow material may be used at a 10-20% by weight loading to act as a flux which adds structural integrity and reduces particle shedding.

The blending step involves mechanical blending of ion exchange resin with the polymeric binder. The ion exchange resin is present in a concentration of 10-80% by weight, preferably 40-60% by weight, based on the weight of the combination. Blending may be done in commercial mixing equipment to produce a homogeneous mixture.

The mixture is placed in a mold, or multiple molds, such that there is an adequate number of cavities to meet the volume demands of the commercial application. Molds are produced of carbon steel, stainless steel, brass, or aluminum, and may have a single cavity, or up to several hundred. The number of cavities is also a function of the part geometry, and the heating method required to assure consistent parts. Mold filling is preferably assisted by using commercial powder handling and vibratory equipment.

Thermal processing is carried out by introducing heat to the mold, using any of the various controllable heating means. Electrical resistance heating, electrical induction heating, or steam heat may be used. The applied heat is controlled as appropriate to allow softening of the polymer particles and allow inter-particle binding to occur. The resin is thus trapped interstitially and has some degree of direct adhesion to the binder.

Processing of parts with consistent porosity, strength, and flow characteristics is dependent on carefully considered application of commercial process control equipment. Control of the temperature cycle must allow consistent part manufacture such that there are no problems with under-processing which leads to weak, unsintered parts, or overprocessing, leading to glazed, non-porous parts.

A typical composition of this invention was prepared as follows.

A strong acid cation exchange resin made up of polystyrene cross-linked with divinyl benzene with sodium as the original cation having a particle size range between 16 to 40 US mesh, was prepared. This resin was added with thorough mixing to an equal weight of ethylene vinyl acetate (EVA) having a size range between 30 and 200 US mesh.

Mold cavities were filled with a homogeneous blend of these resins. The resins were settled into place using conventional vibratory equipment assuring consistency of mold filling and homogeneous-sized interstices.

The temperature of the mold was raised to 200-230°F for 5 to 10 minutes to cause melting of the EVA binder resin. As the heat of the mold transferred to the resin blend, the points of contact between adjacent particles of EVA binder became tacky and adhered together, forming a matrix. Particles of the ion exchange resin became trapped within this matrix. There was also some degree of direct adhesion of the ion exchange resin particles to the softened EVA binder. The mold was then exposed to water at ambient temperature for cooling.

Following cooling, the formed compositions were separated from the mold.

The pore volume of this composition was in the range of 35-60% and the average pore size was in the range of 60-150 microns.

The apparatus of this invention containing ion exchange resin or macroneted semi-functionalized polymers finds utility in the filtration and ion exchange of fluids, including air and liquids. It may be used as a water softening apparatus for appliances such as irons, humidifiers and refrigerators. It may be used as a potable water device using resins to remove nitrates, metals or other contaminants, and may also be used to provide biologically potable water from virtually any source water. It may be used in air or gaseous applications for the removal of ionized gases, organic vapors, smoke or plumes such as that generated by lasers in surgical applications.

One preferred embodiment of the invention is a thermal blanket water softening element and filter. The thermal blanket system is used to keep shock or burn victims' bodies at controlled temperature. The system uses a recirculation loop to control temperature of water passing through a heat exchanger and to a blanket worn by the patient. The cation resin element is placed in the flow container having conventional adapter ends in stream and removes hardness minerals from the water and prevents hard water scale within the system.

In another embodiment, a porous element is made with integrated anion exchange resin and is a component of an on-line potable water filter having adaptable ends. The anion exchange element is treated after manufacture, but before cartridge assembly, to elute iodine as water passes through the element. The iodine form of the resin is an effective anti-microbial compound for use in controlling bacteria and viruses in the water supply.

In the foregoing specification, a detailed description of certain embodiments of the present invention has been set forth for purposes of explanation. It will be apparent, however, that modifications and variations therefrom may be made by those skilled in the art without departing from the spirit and scope of this invention. Accordingly, only such limitations are to be imposed on this invention as are indicated in the appended claims.

## Claims

1. A combination of filter and ion exchange material comprising a sintered body comprising 10 to 80% by weight, based on the total weight of the combination of particles of at least one synthetic ion exchange resin integrated into a porous binder matrix comprising at least one thermoplastic resin.

2. The combination of claim 1, wherein particle size range of the binder resin is between 10 and 325 US mesh.

3. The combination of claim 1, wherein particle size range of the ion exchange resin is between 10 and 325 US mesh.

4. The combination of claim 1, wherein the ion exchange resin is present in a proportion of 40-60% by weight and the porous matrix binder is present in a proportion of 40-60% by weight.

5. The combination of claim 1, wherein the binder resin is polyethylene, polypropylene or ethylene vinyl acetate.

6. The combination of claim 1, wherein the porous matrix binder comprises polyethylene having two separate melt flow grades.

7. The combination of claim 1, wherein the sintered body is in the shape of a hollow cylinder, a hollow cylinder with one closed end, a solid cylinder, a sheet, a disk, or a dome.

8. A method for treating a fluid, which comprises passing the fluid through a sintered body comprising particles of at least one synthetic ion exchange resin integrated into a porous matrix binder comprising at least one thermoplastic resin.

9. A method of purifying water, which comprises passing the water through a combination of filter and ion exchange material, which combination comprises a sintered body comprising particles of at least one synthetic ion exchange resin containing iodine integrated into a porous matrix binder comprising at least one thermoplastic resin.
